(19) Europäisches Patentamt
European Patent Office
Office européen des brevets

(11) **EP 4 167 412 B1**

(12) **EUROPEAN PATENT SPECIFICATION**

(45) Date of publication and mention
of the grant of the patent:
**28.01.2026 Bulletin 2026/05**

(51) International Patent Classification (IPC):
*H02H 3/00* (2006.01)   *B60L 9/00* (2019.01)
*B60L 9/30* (2006.01)   *B60L 9/14* (2006.01)
*B60L 3/00* (2019.01)

(21) Application number: **20947467.5**

(52) Cooperative Patent Classification (CPC):
**B61L 15/0081; B60L 3/0038; B60L 3/0092;
B60L 9/00; B60L 9/30; H02J 3/007; H02J 3/02;**
B60L 2200/26; B60L 2250/16; H02H 3/28

(22) Date of filing: **08.09.2020**

(86) International application number:
**PCT/CN2020/113940**

(87) International publication number:
**WO 2022/021538 (03.02.2022 Gazette 2022/05)**

(54) **CONTROL DEVICE AND METHOD FOR TRACTION CONVERTER**

STEUERVORRICHTUNG UND VERFAHREN FÜR TRAKTIONSWANDLER

DISPOSITIF ET PROCÉDÉ DE COMMANDE POUR CONVERTISSEUR DE TRACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2020 CN 202010751203**

(43) Date of publication of application:
**19.04.2023 Bulletin 2023/16**

(73) Proprietor: **Zhuzhou CRRC Times Electric Co.,
Ltd.
Zhuzhou, Hunan 412001 (CN)**

(72) Inventors:
• **SHANG, Jing**
  **Zhuzhou, Hunan 412001 (CN)**
• **XU, Shaolong**
  **Zhuzhou, Hunan 412001 (CN)**
• **HUANG, Hao**
  **Zhuzhou, Hunan 412001 (CN)**
• **FU, Gang**
  **Zhuzhou, Hunan 412001 (CN)**

• **GAN, Weiwei**
  **Zhuzhou, Hunan 412001 (CN)**
• **ZHANG, Zhibing**
  **Zhuzhou, Hunan 412001 (CN)**
• **ZOU, Dangbing**
  **Zhuzhou, Hunan 412001 (CN)**
• **CHEN, Jinyu**
  **Zhuzhou, Hunan 412001 (CN)**
• **LIN, Zhenjun**
  **Zhuzhou, Hunan 412001 (CN)**
• **ZOU, Donghai**
  **Zhuzhou, Hunan 412001 (CN)**
• **XUE, Xin**
  **Zhuzhou, Hunan 412001 (CN)**

(74) Representative: **Lorenz Seidler Gossel Part. mbB
Widenmayerstr. 23
80538 München (DE)**

(56) References cited:
EP-A1- 3 159 202     CN-A- 101 702 506
CN-A- 105 510 680    CN-A- 105 629 190
CN-A- 105 629 190    CN-U- 205 355 773
US-A1- 2012 242 322

## Description

This application claims priority to Chinese Patent Application No. 202010751203.X, titled "APPARATUS AND METHOD FOR CONTROLLING TRACTION CONVERTER", filed on July 30, 2020 with the China National Intellectual Property Administration (CNIPA).

## FIELD

The present disclosure relates to the technical field of rail vehicles, and in particular to an apparatus for controlling a traction converter and a method for controlling a traction converter.

## BACKGROUND

Due to differences in a power supply mode of a line, a rail vehicle is required to operate alternately between an alternating current (e.g., AC25kV/50Hz, AC15kV/16.7Hz) power supply mode and a direct current (e.g., DC3000V, DC1500V, DC750V) power supply mode. For different power supply modes, a traction system of the rail vehicle needs to operate in a circuit operation mode that matches the power supply mode. If an operation mode of a main circuit of the traction system does not match the power supply mode, it will cause the circuit of the traction system to burn up, endangering the operation safety of the vehicle. Detection of the power supply mode of the line and targeted control of the rail vehicle have become the key to the safe and reliable operation of the rail vehicle. However, the current control scheme for the traction system is that a driver selects an operation mode of the rail vehicle based on an external power supply command, and then a network control system closes a corresponding circuit breaker based on a power supply mode command from the driver. This scheme heavily relies on the external information transmission and the manual operation of the driver, and there exists a risk of manual operation error, which poses security risks to the operation of the rail vehicle.

Therefore, it has become an urgent technical problem to be solved by those skilled in the art to provide a solution capable of automatically detecting a power supply mode and controlling an operation mode of a main circuit of a traction converter.

CN105629190 discloses an AC/DC network voltage detection circuit comprising an AC/DC network voltage detection device, a high voltage transformer, a current-limiting resistor, a CCU, and a TCU. The input port of the AC/DC network voltage detection device is connected with a locomotive roof power supply network wire, and a first output port is connected with a CCU.

EP3159202 discloses a car control device capable of inspecting a sensor without using a dedicated circuit or a test mode. A car control device according to an embodiment includes a converter and an inverter configured to covert power received by a pantograph to power for driving a motor, a first contactor disposed between the transformer and the converter, a second contactor and a resistor connected in series with each other and in parallel with the first contactor, a first voltage detector and a second voltage detector disposed between the converter and the inverter, and a control unit.

CN105510680 discloses an alternating current and direct current net voltage detection device. The device comprises a high pressure mutual inductor, a current limiting resistor, a direct current blocking and alternating current passing circuit, an alternating current blocking and direct current passing circuit, an alternating current sampling circuit and a direct current sampling circuit.

## SUMMARY

The objective of the present disclosure is to provide an apparatus for controlling a traction converter, which can automatically detect a power supply mode and control an operation mode of a main circuit of the traction converter, so as to improve the operation safety of a rail vehicle. Another objective of the present disclosure is to provide a method for controlling a traction converter, which also has the above technical effects.

To solve the above technical problems, an apparatus for controlling a traction converter is provided according to the present disclosure. The apparatus includes:

a voltage detection circuit and a transmission control unit;

the voltage detection circuit is configured to detect a grid voltage and output a voltage signal;

the transmission control unit is configured to determine a power supply mode of a line based on the voltage signal, calculate the grid voltage based on the voltage signal, and control an operation mode of a main circuit of the traction converter based on the power supply mode and the grid voltage;

the voltage detection circuit includes:

a first voltage detection circuit and a second voltage detection circuit;

the first voltage detection circuit includes a transformer, and the first voltage detection circuit is configured to perform step-down processing on the grid voltage through the transformer and output a first voltage signal obtained through the step-down processing;

the second voltage detection circuit includes a voltage sensor, and the second voltage detection circuit is configured to collect the grid voltage through the voltage sensor and output a second voltage signal;

the transformer includes a first transformer and a second transformer. A primary coil of the first transformer is connected to a pantograph, a secondary coil of the first transformer is connected to a primary coil of the second transformer, and a secondary coil of the second transformer is connected to the transmission control unit;the second voltage detection circuit further includes a current-limiting resistor and a filter capacitor. The current-limiting resistor is connected in series with the primary coil of the first transformer. The voltage sensor is connected in parallel with the current-limiting resistor. The filter capacitor is connected in parallel with the current-limiting resistor;

the transmission control unit is further configured to:

determine the power supply mode of the line as an AC power supply mode, in a case that the first voltage signal and the second voltage signal each is an AC signal and the first voltage signal has a frequency the same as that of the second voltage signal;

determine the power supply mode of the line as a DC power supply mode, in a case that the first voltage signal is in an amplitude of zero and the second voltage signal is a DC signal;

determine that a rail vehicle is in a no-power area, in a case that the first voltage signal and the second voltage signal each is in an amplitude of zero; and

determine that a rail vehicle is in an abnormal working condition, in a case that the first voltage signal is an AC signal and the second voltage signal is inconsistent with the first voltage signal;

the transmission control unit is further configured to:

in a case that the power supply mode of the line is an AC power supply mode,

calculate a total impedance of an AC/DC voltage detection link based on a transformation ratio of the first transformer, a transformation ratio of the second transformer, an equivalent sampling resistance of the AC/DC grid voltage sampling module, a winding resistance of the primary coil of the first transformer, a resistance of the current-limiting resistor and a capacitance of the filter capacitor, the AC/DC voltage detection link including the voltage detection circuit and the AC/DC grid voltage sampling module; and

calculate the grid voltage in the AC power supply mode, based on the total impedance of the AC/DC voltage detection link and a sampling voltage of the equivalent sampling resistance of the AC/DC grid voltage sampling module;

in a case that the power supply mode of the line is a DC power supply mode,

calculate a total impedance of the voltage detection circuit based on the resistance of the current-limiting resistor and the winding resistance of the primary coil of the first transformer; and

calculate the grid voltage in the DC power supply mode based on the total impedance of the voltage detection circuit and the second voltage signal;

the transmission control unit is further configured to:

control the main circuit of the traction converter to be in an AC operation mode, in a case that the power supply mode of the line is the AC power supply mode;

control the main circuit of the traction converter to be in a DC operation mode, in a case that the power supply mode of the line is the DC power supply mode;

stop an operation of the traction converter, and control the main circuit of the traction converter to be in the AC operation mode, in a case that the rail vehicle is in a no-power area; and

stop the operation of the traction converter, and control the main circuit of the traction converter to be in the AC operation mode, in a case that the rail vehicle is in an abnormal working condition; and

a communication processing module, configured for data interaction with a display in a driver control room.

In an embodiment, the transmission control unit includes:

an AC/DC grid voltage sampling module, configured to convert the voltage signal into a voltage signal which is allowable to be inputted to a digital signal processing module;

the digital signal processing module, configured to: determine the power supply mode of the line based on the voltage signal outputted by the AC/DC grid voltage sampling module, calculate the grid voltage based on the voltage signal outputted by the AC/DC grid voltage sampling module, and control the operation mode of the main circuit of the traction converter based on the power supply mode and the grid voltage.

In an embodiment, the transmission control unit is further configured to transmit the power supply mode of the line and the operation mode of the main circuit of the traction converter to the display in the driver control room.
To solve the above technical problems, a method for controlling a traction converter is further provided according to the present disclosure. The method includes:

receiving a voltage signal outputted by a voltage detection circuit;

determining a power supply mode of a line based on the voltage signal;

calculating a grid voltage based on the voltage signal; and

controlling an operation mode of a main circuit of the traction converter based on the power supply mode and the grid voltage;

the receiving the voltage signal outputted by the voltage detection circuit includes:

receiving a first voltage signal outputted by a first voltage detection circuit and a second voltage signal outputted by a second voltage detection circuit,

the first voltage detection circuit includes a transformer, and the first voltage detection circuit is configured to perform step-down processing on the grid voltage through the transformer and output a first voltage signal obtained through the step-down processing;

the second voltage detection circuit includes a voltage sensor, and the second voltage detection circuit is configured to collect the grid voltage through the voltage sensor and output the second voltage signal;

the determining the power supply mode of the line based on the voltage signal includes:

determining the power supply mode of the line as an AC power supply mode, in a case that the first voltage signal and the second voltage signal each is an AC signal and the first voltage signal has a frequency the same as that of the second voltage signal;

determining the power supply mode of the line as a DC power supply mode, in a case that the first voltage signal is in an amplitude of zero and the second voltage signal is a DC signal;

determining that a rail vehicle is in a no-power area, in a case that the first voltage signal and the second voltage signal each is in an amplitude of zero; and

determining that a rail vehicle is in an abnormal working condition, in a case that the first voltage signal is an AC signal and the second voltage signal is inconsistent with the first voltage signal;

the calculating the grid voltage based on the voltage signal includes:

in a case that the power supply mode of the line is an AC power supply mode,

calculating a total impedance of an AC/DC voltage detection link based on a transformation ratio of a first transformer, a transformation ratio of a second transformer, an equivalent sampling resistance of an AC/DC grid voltage sampling module, a winding resistance of a primary coil of the first transformer, a resistance of a current-limiting resistor and a capacitance of a filter capacitor, the AC/DC voltage detection link including the voltage detection circuit and the AC/DC grid voltage sampling module;

calculating the grid voltage in the AC power supply mode, based on the total impedance of the AC/DC voltage detection link and a sampling voltage of the equivalent sampling resistance of the AC/DC grid voltage sampling module;

in a case that the power supply mode of the line is a DC power supply mode,

calculating a total impedance of the voltage detection circuit based on the resistance of the current-limiting resistor and the winding resistance of the primary coil of the first transformer; and

calculating the grid voltage in the DC power supply mode based on the total impedance of the voltage detection circuit and the second voltage signal;

the controlling the operation mode of the main circuit of the traction converter based on the power supply mode and the grid voltage includes:

controlling the main circuit of the traction converter to be in an AC operation mode, in a case that the power supply mode of the line is the AC power supply mode;

controlling the main circuit of the traction converter to be in a DC operation mode, in a case that the power supply mode of the line is a DC power supply mode;

stopping an operation of the traction converter and controlling the main circuit of the traction converter to be in the AC operation mode, in a case that the rail vehicle is in a no-power area; and

stopping the operation of the traction converter and controlling the main circuit of the traction converter to be in the AC operation mode, in a case that the rail vehicle is in an abnormal working condition.

In an embodiment, the method further includes:
transmitting the power supply mode of the line and the operation mode of the main circuit of the traction converter to a display in a driver control room.

The apparatus for controlling a traction converter according to the present disclosure includes: a voltage detection circuit and a transmission control unit. The voltage detection circuit is configured to detect a grid voltage and output a voltage signal. The transmission control unit is configured to determine a power supply mode of a line based on the voltage signal, calculate the grid voltage based on the voltage signal, and control an operation mode of a main circuit of the traction converter based on the power supply mode and the grid voltage.

As can be seen, with the apparatus for controlling a traction converter according to the present disclosure, the grid voltage is detected through the voltage detection circuit, the power supply mode of the line and an actual grid voltage are automatically determined through the transmission control unit based on the voltage signal detected by the voltage detection circuit, and the main circuit of the traction converter is automatically controlled to operate in a corresponding mode. The apparatus replaces the traditional manual operation, effectively avoiding the risk of manual operation errors and improving the operation safety of a rail vehicle.

The method for controlling a traction converter according to the present disclosure also has the above technical effects.

## BRIEF DESCRIPTION OF THE DRAWINGS

In order to illustrate technical solutions in embodiments of the present disclosure more clearly, drawings used in the conventional technology and in the embodiments are briefly introduced hereinafter. Apparently, the drawings in the following description illustrate only some embodiments of the present disclosure, and other drawings may be obtained by those skilled in the art based on these drawings without any creative efforts.

FIG. 1 is a schematic diagram of an apparatus for controlling a traction converter according to an embodiment of the present disclosure;

FIG. 2 is a schematic diagram of an apparatus for controlling a traction converter according to another embodiment of the present disclosure;

FIG. 3 is a schematic diagram of an application scenario of an apparatus for controlling a traction converter according to an embodiment of the present disclosure; and

FIG. 4 is a schematic flowchart of a method for controlling a traction converter according to an embodiment of the present disclosure.

## DETAILED DESCRIPTION

The core of the present disclosure is to provide an apparatus for controlling a traction converter, which can automatically detect a power supply mode and control an operation mode of a main circuit of the traction converter, so as to improve the operation safety of a rail vehicle. Another core of the present disclosure is to provide a method for controlling a traction converter, which also has the above technical effects.

In order to make the objectives, technical solutions and advantages of the embodiments of the present disclosure clearer, the technical solutions in the embodiments of the present disclosure will be described clearly and completely hereinafter with reference to the drawings in the embodiments of the present disclosure. Apparently, the described embodiments are a part of embodiments of the present disclosure, rather than all of embodiments. Based on the embodiments in the present disclosure, all other embodiments obtained by those skilled in the art without creative efforts shall fall within the protection scope of the present disclosure.

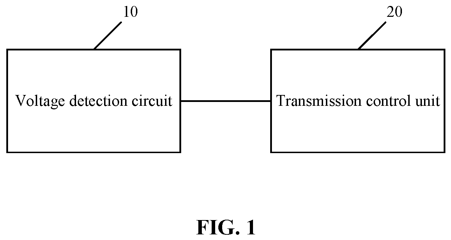

Reference is made to FIG. 1. FIG. 1 is a schematic diagram of an apparatus for controlling a traction converter according to an embodiment of the present disclosure. As shown in FIG. 1, the apparatus includes a voltage detection circuit 10 and a transmission control unit 20.

The voltage detection circuit 10 is configured to detect a grid voltage and output a voltage signal. In a specific implementation, the voltage detection circuit 10 includes: a first voltage detection circuit and a second voltage detection circuit. The first voltage detection circuit includes a transformer. The first voltage detection circuit is configured to perform step-down processing on the grid voltage through the transformer, and output a first voltage signal obtained through the step-down processing. The second voltage detection circuit includes a voltage sensor, and is configured to collect the grid voltage through the voltage sensor and output a second voltage signal.

Specifically, two voltage detection circuits 10, i.e., the first voltage detection circuit and the second voltage detection circuit, are set in this embodiment. The first voltage detection circuit is provided with a transformer. The first voltage detection circuit performs step-down processing on the grid voltage through the transformer, and outputs a first voltage signal obtained through the step-down processing. In a case that the power supply mode is an AC power supply mode, the first voltage detection circuit outputs AC power. In a case that the power supply mode is a DC power supply mode, the transformer will not generate electromagnetic induction, and the first voltage detection circuit has an output of zero, that is, there is no output.

The second voltage detection circuit is provided with a voltage sensor. The second voltage detection circuit collects the grid voltage through the voltage sensor and outputs a second voltage signal. When the power supply mode is a DC power supply mode, the second voltage detection circuit outputs a DC sensing signal to the transmission control unit 20, for the transmission control unit 20 to determine the power supply mode and calculate an actual grid voltage. In a case that the power supply mode is an AC power supply mode, the second voltage detection circuit outputs an AC sensing signal for the transmission control unit 20 to calculate the frequency of the AC voltage and determine whether the inputted voltage signal is positive or negative. Due to the large difference in an amplitude of the grid voltage between the AC power supply mode and the DC power supply mode, at least 12kV or more, and due to the range and the accuracy of the voltage sensor and the transmission control unit 20, in order to ensure the sampling accuracy of the transmission control unit 20 in the DC power supply mode, the transmission control unit 20 that takes the sensing signal of the voltage sensor as a signal input cannot sample an over-range value of an AC voltage in the DC power supply mode, but can accurately calculate the frequency of the AC voltage and determine whether the voltage signal is positive or negative.

In this embodiment, two paths of voltage signals are collected by the first voltage detection circuit and the second voltage detection circuit, and the transmission control unit 20 analyzes the two paths of voltage signals to determine the power supply mode and the grid voltage. Compared with the technical solution of a single voltage signal, the calculation accuracy of the grid voltage and the determination accuracy can be effectively improved in this embodiment.

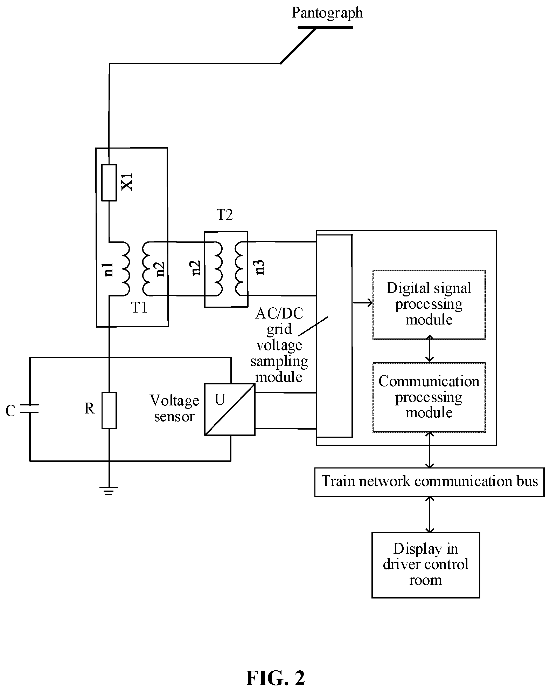

Further, referring to FIG. 2, on the basis of the above embodiment, the transformer in the first voltage detection circuit may include a first transformer T1 and a second transformer T2. A primary coil of the first transformer T1 is connected to a pantograph, a secondary coil of the first transformer T1 is connected to a primary coil of the second transformer T2, and a secondary coil of the second transformer T2 is connected to the transmission control unit 20.

Specifically, in this embodiment, the first voltage detection circuit includes two transformers. The first transformer T1, which may be a grid voltage transformer, is configured to scale an AC voltage inputted by the grid, and decrease a higher AC voltage introduced by the pantograph to be within a voltage range acceptable to the second transformer T2. The second transformer T2 is configured to further perform step-down processing on the AC voltage outputted by the first transformer T1, so as to decrease the AC voltage outputted by the first transformer T1 to be within a voltage range acceptable to the transmission control unit. In addition, the second transformer T2 serves as an intermediate structure connecting the first transformer T1 and the transmission control unit 20, and thus the second transformer T2 can isolate the AC voltage outputted by the first transformer T1 from the transmission control unit 20.

It can be understood that the above embodiment is simply one implementation provided by the present disclosure, and is not the only limitation. Other numbers of transformers may be set according to actual needs. For example, one or more transformers may be added in addition to the first transformer T1 and the second transformer T2.

Further, as shown in FIG. 2, on the basis of the above embodiment, the second voltage detection circuit may further include a current-limiting resistor R and a filter capacitor C. The current-limiting resistor R is connected in series with a primary coil of the first transformer T1, the voltage sensor is connected in parallel with the current-limiting resistor R, and the filter capacitor C is connected in parallel with the current-limiting resistor R.

Specifically, the current-limiting resistor R is connected in series with the primary coil of the first transformer T1, namely, the current-limiting resistor R is connected in series with an equivalent impedance (i.e., X1 shown in FIG. 2 ) of the first transformer T1. The current-limiting resistor R is configured to limit the current inputted by a high voltage to the circuit, to prevent the voltage sensor from being burned up by a large current. The filter capacitor C is connected in parallel with the current-limiting resistor R, which plays a role in current limiting and filtering, so as to prevent the voltage sensor from being burned up due to an excessive voltage fluctuation and due to an excessive transient input current.

The transmission control unit 20 is configured to determine the power supply mode of the line based on the voltage signal outputted by the voltage detection circuit 10, calculate the grid voltage based on the voltage signal, and control an operation mode of a main circuit of the traction converter based on the power supply mode and the grid voltage.

As shown in FIG. 2, the transmission control unit 20 includes an AC/DC grid voltage sampling module, a digital signal processing module and a communication processing module. The AC/DC grid voltage sampling module is configured to convert the voltage signal into a voltage signal which is allowable to be inputted to the digital signal processing module. The digital signal processing module is configured to determine the power supply mode of the line based on the voltage signal outputted by the AC/DC grid voltage sampling module, calculate the grid voltage based on the voltage signal outputted by the AC/DC grid voltage sampling module, and control an operation mode of the main circuit of the traction converter based on the power supply mode and the grid voltage. The communication processing module is configured for data interaction with a display in a driver control room.

In addition, in correspondence to the implementation in which the voltage detection circuit 10 includes the first voltage detection circuit and the second voltage detection circuit, the transmission control unit 20 determines the power supply mode in the following way. The power supply mode of the line is determined as an AC power supply mode, in a case that the first voltage signal and the second voltage signal each is an AC signal and the first voltage signal has a frequency the same as that of the second voltage signal. The power supply mode of the line is determined as a DC power supply mode, in a case that the first voltage signal is in an amplitude of zero and the second voltage signal is a DC signal. It is determined that a rail vehicle is in a no-power area, in a case that the first voltage signal and the second voltage signal each is in an amplitude of zero. It is determined that a rail vehicle is in an abnormal working condition, in a case that the first voltage signal is an AC signal and the second voltage signal is inconsistent with the first voltage signal.

Specifically, the first voltage detection circuit has no output in the DC power supply mode; and the first voltage detection circuit outputs an AC power in the AC power supply mode. The second voltage detection circuit has an output regardless in the DC power supply mode or the AC power supply mode. Therefore, in a case that the voltage signal outputted by the first voltage detection circuit has a frequency the same as that of the voltage signal outputted by the second voltage detection circuit, and the two voltage signals both alternate between being positive and being negative, then the power supply mode of the line is determined as the AC power supply mode. In a case that the first voltage circuit has no output and the output of the second voltage detection circuit always is in an amplitude greater than zero, then the power supply mode of the line is determined as the DC power supply mode. In a case that none of the first voltage detection circuit and the second voltage detection circuit has an output, it is determined that the rail vehicle is in a no-power area. In a case that the first voltage detection circuit has a voltage output, and the output of the first voltage detection circuit is inconsistent with the output of the second voltage detection circuit, it is determined that the rail vehicle is in an abnormal working condition. The inconsistency between outputs of the first voltage detection circuit and the second voltage detection circuit may include the case where the first voltage detection circuit outputs an AC power and the second voltage detection circuit has no output, the case where the first voltage detection circuit and the second voltage detection circuit both output AC power, but the AC power outputted by the first voltage detection circuit has a frequency which is inconsistent with that of the AC power outputted by the second voltage detection circuit, and the case where the first voltage detection circuit outputs an AC power but the second voltage detection circuit outputs a DC power.

Further, in correspondence to the implementation in which the first voltage detection circuit includes two transformers and the second voltage detection circuit further includes the current-limiting resistor R and the filter capacitor C, the transmission control unit 20 calculates the actual grid voltage in the following way.

A total impedance of an AC/DC voltage detection link is calculated based on a transformation ratio of the first transformer T1, a transformation ratio of the second transformer T2, an equivalent sampling resistance of the AC/DC grid voltage sampling module, a winding resistance of the primary coil of the first transformer T1, a resistance of the current-limiting resistor R and a capacitance of the filter capacitor C, in a case that the power supply mode of the line is an AC power supply mode. The AC/DC voltage detection link includes the voltage detection circuit 10 and the AC/DC grid voltage sampling module.

The grid voltage in the AC power supply mode is calculated based on the total impedance of the AC/DC voltage detection link and a sampling voltage of the equivalent sampling resistance of the AC/DC grid voltage sampling module.

A total impedance of the voltage detection circuit 10 is calculated based on the resistance of the current-limiting resistor R and the winding resistance of the primary coil of the first transformer T1, in a case that the power supply mode of the line is a DC power supply mode.

The grid voltage in the DC power supply mode is calculated based on the total impedance of the voltage detection circuit 10 and the second voltage signal.

Specifically, in a case that the power supply mode of the line is the AC power supply mode, it is assumed that the grid voltage is represented as $U$, the amplitude of the grid voltage is represented as $U_{amp}$, the angular frequency of the grid voltage is represented as $\omega$, the transformation ratio of the first transformer T1 is represented as $k_{12} = \dfrac{n1}{n2}$ , the transformation ratio of the second transformer T2 is represented as $k_{23} = \dfrac{n2}{n3}$ , and the winding resistance of the primary coil of the first transformer T1 is represented as $R_z$. Since the secondary coil of the first transformer T1 has less windings, the winding resistance of the secondary coil of the first transformer T1 is ignored. Since the primary coil and the secondary coil of the second transformer T2 each has windings far less than the windings of the primary coil of the first transformer T1, the resistance of a synchronous transformer is ignored. The resistance of the current-limiting resistor R is represented as $R_d$, the capacitance of the filter capacitor C is represented as $C$, and the equivalent sampling resistance of the AC/DC grid voltage sampling module is represented as $R_3$.

Therefore, in the AC power supply mode, the equivalent impedance $X_1$ of the first transformer T1 is represented as:

$$X_1 = k_{12}^2 k_{23}^2 R_3 + R_z \qquad\qquad (1).$$

The current-limiting resistor R and the filter capacitor C together form the impedance $X_r$ which is represented as follows:

$$\frac{1}{X_r} = \frac{1}{R_d} + jwC \qquad\qquad (2).$$

It is assumed that $Y_d = \dfrac{1}{R_d}$ and $Y_c = wC$, then the following equation may be obtained:

$$X_r = \frac{Y_d}{Y_d^2 + Y_c^2} - j\frac{Y_c}{Y_d^2 + Y_c^2} \tag{3}.$$

The total impedance $X$ of the AC/DC voltage detection link is represented as:

$$X = X_1 + X_r = (k_{12}^2 k_{23}^2 R_3 + R_z + \frac{Y_d}{Y_d^2 + Y_c^2}) - j\frac{Y_c}{Y_d^2 + Y_c^2} \tag{4}.$$

It is assumed that $R_n = k_{12}^2 k_{23}^2 R_3 + R_z + \frac{Y_d}{Y_d^2 + Y_c^2}$, and $H_n = -\frac{Y_c}{Y_d^2 + Y_c^2}$, the following equation is obtained:

$$X = R_n + jH_n \tag{5}.$$

Furthermore, the current $I$ flowing through the first transformer T1 in the AC/DC voltage detection link is represented as:

$$I = U / X = \frac{UR_n}{R_n^2 + H_n^2} - j\frac{UH_n}{R_n^2 + H_n^2} \tag{6}.$$

Furthermore, the voltage $U_3$ sampled on the equivalent sampling resistance of the AC/DC grid voltage sampling module is represented as:

$$U_3 = k_{12}k_{23}I \cdot R_3 = \frac{k_{12}k_{23}UR_nR_3}{R_n^2 + H_n^2} - j\frac{k_{12}k_{23}UH_nR_3}{R_n^2 + H_n^2} \tag{7}.$$

Then, the amplitude $U_{3amp}$ of the voltage $U_3$ sampled on the equivalent sampling resistance of the AC/DC grid voltage sampling module is represented as:

$$U_{3amp} = U_{amp}\frac{k_{12}k_{23}R_3}{R_n^2 + H_n^2}\sqrt{R_n^2 + H_n^2} \tag{8}.$$

Thus according to the equation (8), the amplitude $U_{amp}$ of the actual grid voltage may be obtained as:

$$U_{amp} = U_{3amp}\frac{\sqrt{R_n^2 + H_n^2}}{k_{12}k_{23}R_3} \tag{9}.$$

A phase difference $\theta$ between the voltage $U_3$ sampled on the equivalent sampling resistance of the AC/DC grid voltage sampling module and the grid voltage $U$ may be represented as:

$$\theta = \arctan(\frac{H_n}{R_n}) \tag{10}.$$

Furthermore, the digital signal processing unit obtains the angular frequency $\omega$ of the grid voltage and calculates the actual grid voltage $U$ according to equations (9) and (10) and through a phase-locking algorithm. The actual grid voltage $U$ may be represented as follows:

$$U = U_{amp}[\cos(\omega t + \theta) + j\sin(\omega t + \theta)] = U_{3amp}\frac{\sqrt{R_n^2 + H_n^2}}{k_{12}k_{23}R_3}[\cos(\omega t + \theta) + j\sin(\omega t + \theta)] \quad (11).$$

The above phase-locking algorithm will not be described in detail in the present disclosure, and reference may be made to the relevant description in the conventional technology.

In a case that the power supply mode of the line is the DC power supply mode, the first transformer T1 does not generate electromagnetic induction, and thus there is no voltage signal outputted to the second transformer T2, and the second transformer T2 does not output any voltage signal to the AC/DC grid voltage sampling module, therefore no voltage will be detected by the digital signal processing unit. In this case, it is assumed that the grid voltage is represented as $U_{dnet}$ and the winding resistance of the primary coil of the first transformer T1 is represented as $R_z$. Since the secondary coil of the first transformer T1 has less windings, the winding resistance of the secondary coil of the first transformer T1 is ignored. Since the primary coil and the secondary coil of the second transformer T2 each has windings far less than the windings of the primary coil of the first transformer T1, the resistance of the second transformer T2 is ignored. Since the filter capacitor C has a characteristic of blocking a direct current and letting an alternating current go, it is equivalent to an open circuit for the DC power supply. Thus the capacitance of the filter capacitor C is equal to zero ($C = 0$), and the resistance of the current-limiting resistor R is $R_d$.

Therefore, in the DC power supply mode, the total impedance $X_d$ of the voltage detection circuit is represented as:

$$X_d = R_z + R_d \tag{12}.$$

The DC voltage $U_d$ inputted by the voltage sensor in the second voltage detection circuit is represented as:

$$U_d = R_d \cdot \frac{U_{dnet}}{X_d} = U_{dnet}\frac{R_d}{R_z + R_d} \tag{13}.$$

Then the grid voltage $U_{dnet}$ may be obtained as:

$$U_{dnet} = U_d\frac{R_z + R_d}{R_d} \tag{14}.$$

As can be seen, in the DC power supply mode, when calculating the actual voltage, the digital signal processing unit simply needs to perform compensation calculation, by using the equation (14), on the $U_d$ calculated by the sampling, and then the actual grid voltage may be obtained.

Further, on the basis of the above embodiment, the transmission control unit 20 may control the operation mode of the main circuit of the traction converter as follows.

The main circuit of the traction converter is controlled to be in an AC operation mode, in a case that the power supply mode of the line is an AC power supply mode. The main circuit of the traction converter is controlled to be in a DC operation mode, in a case that the power supply mode of the line is a DC power supply mode. The main circuit of the traction converter is controlled to be in the AC operation mode and the operation of the traction converter is stopped, in a case that the rail vehicle is in a no-power area. The main circuit of the traction converter is controlled to be in the AC operation mode and the operation of the traction converter is stopped, in a case that the rail vehicle is in an abnormal working condition.

Specifically, in a case that the rail vehicle travels in an AC power supply area, the transmission control unit 20 determines the power supply mode as the AC power supply mode. In this case, the transmission control unit 20 controls the main circuit of the traction converter to be in the AC operation mode. In a case that the rail vehicle travels in the no-power area, the first voltage detection circuit and the second voltage detection circuit each has an output of zero, therefore the transmission control unit 20 stops the operation of the traction converter and controls the main circuit of the traction converter to be in the AC operation mode. After the rail vehicle enters a DC power supply area, the transmission control unit 20 determines the power supply mode as the DC power supply mode. In this case, the transmission control unit 20 controls the main circuit of the traction converter to be in the DC operation mode. In a case that the transmission control unit 20 determines that the rail vehicle is in an abnormal working condition, the transmission control unit 20 controls the main circuit of the traction converter to be in the AC operation mode and stops the operation of the traction converter, to ensure the safety of the traction converter.

Further, the transmission control unit 20 transmits the power supply mode of the line and the operation mode of the main circuit of the traction converter to a display in a driver control room. Especially upon detecting an abnormal working condition, the transmission control unit 20 transmits the abnormal working condition and the information about stopping the operation of the traction converter to the display in the driver control room through a train network communication bus, so as to inform the relevant person of this situation.

In summary, with the apparatus for controlling a traction converter according to the present disclosure, the grid voltage is detected through the voltage detection circuit, the power supply mode of the line and an actual grid voltage are automatically determined through the transmission control unit based on the voltage signal detected by the voltage detection circuit, and the main circuit of the traction converter is automatically controlled to operate in a corresponding mode. The apparatus replaces the traditional manual operation, effectively avoiding the risk of manual operation errors and improving the operation safety of a rail vehicle.

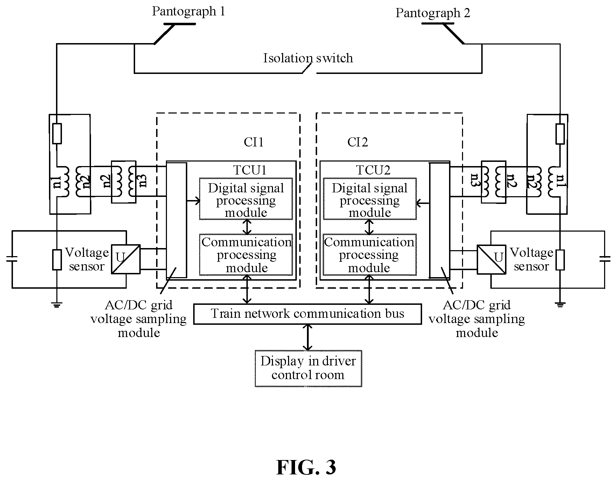

In addition, the apparatus for controlling a traction converter according to the present disclosure is easy to be expanded to apply to two or more pantographs. For a high-voltage power supply system of traction converters of two or more pantographs, it is only required to add an apparatus for controlling a traction converter accordingly. For example, reference is made to FIG. 3, which takes a case where the high-voltage power supply system includes two pantographs and two traction converters as an example.

An isolation switch is connected between the pantograph 1 and the pantograph 2. In a case that the isolation switch is turned on, the pantograph 1 is raised and draws electricity from the power grid, and the pantograph 2 is maintained to be lowered, then the transmission control unit TCU1 of the traction transformer CI1 can accurately detect the power supply mode and control the traction transformer to operate in a corresponding working condition through the technical solution according to the present disclosure. In a case that an abnormal working condition occurs, information about the abnormality is reported to the display in the driver control room to prompt the driver. In a case that the isolation switch is turned on, the pantograph 2 are raised and draws electricity from the power grid, and the pantograph 1 is maintained to be lowered, the transmission control unit TCU2 of the traction transformer CI2 can accurately detect the power supply mode and control the traction transformer to operate in a corresponding working condition through the technical solution according to the present disclosure. In a case that an abnormal condition occurs, information about the abnormality is reported to the display in the driver control room to prompt the driver. In a case that the isolation switch is turned off, and both the pantograph 1 and the pantograph 2 are raised to draw electricity from the power grid to supply power to the two traction transformers respectively, the transmission control unit of each of the two traction transformers can accurately detect the power supply mode and control the traction transformer to operate in a corresponding working condition through the technical solution according to the present disclosure. In a case that an abnormal condition occurs, information about the abnormality is reported to the display in the driver control room to prompt the driver.

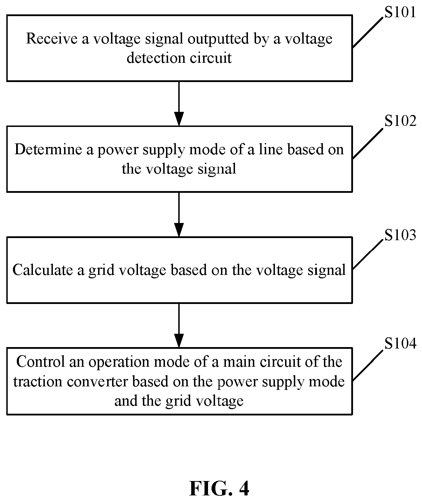

A method for controlling a traction converter is further provided according to the present disclosure. Regarding the method described hereinafter, reference may be made to the apparatus described above. Referring to FIG. 4, FIG. 4 is a schematic flowchart of a method for controlling a traction converter according to an embodiment of the present disclosure. As shown in FIG. 4, the method includes steps S101 to S104.

In S101, a voltage signal outputted by a voltage detection circuit is received.

In S102, a power supply mode of a line is determined based on the voltage signal.

In S103, a grid voltage is calculated based on the voltage signal.

In S104, an operation mode of a main circuit of the traction converter is controlled based on the power supply mode and the grid voltage.

On the basis of the above embodiment, as a preferred implementation, the voltage signal outputted by the voltage detection circuit may be received as follows.

A first voltage signal outputted by a first voltage detection circuit and a second voltage signal outputted by a second voltage detection circuit are received.

The first voltage detection circuit includes a transformer. The first voltage detection circuit is configured to perform step-down processing on the grid voltage through the transformer, and output a first voltage signal obtained through the step-down processing. The second voltage detection circuit includes a voltage sensor. The second voltage detection circuit is configured to collect the grid voltage through the voltage sensor and output the second voltage signal.

On the basis of the above embodiment, as a preferred implementation, the power supply mode of the line may be determined based on the voltage signal as follows.

The power supply mode of the line is determined as an AC supply mode, in a case that the first voltage signal and the second voltage signal each is an AC signal and the first voltage signal has a frequency the same as that of the second voltage signal.

The power supply mode of the line is determined as a DC power supply mode, in a case that the first voltage signal is in an amplitude of zero and the second voltage signal is a DC signal.

It is determined that a rail vehicle is in a no-power area, in a case that the first voltage signal and the second voltage signal each is in an amplitude of zero.

It is determined that the rail vehicle is in an abnormal working condition, in a case that the first voltage signal is an AC signal and the second voltage signal is inconsistent with the first voltage signal.

On the basis of the above embodiment, as a preferred implementation, the grid voltage is calculated based on the voltage signal as follows.

A total impedance of an AC/DC voltage detection link is calculated based on a transformation ratio of a first transformer, a transformation ratio of a second transformer, an equivalent sampling resistance of the AC/DC grid voltage sampling module, a winding resistance of a primary coil of the first transformer, a resistance of a current-limiting resistor and a capacitance of a filter capacitor, in a case that the power supply mode of the line is an AC power supply mode. The AC/DC voltage detection link includes the voltage detection circuit and the AC/DC grid voltage sampling module; and The grid voltage in the AC power supply mode is calculated based on the total impedance of the AC/DC voltage detection link and a sampling voltage of the equivalent sampling resistance of the AC/DC grid voltage sampling module.

A total impedance of the voltage detection circuit is calculated based on the resistance of the current-limiting resistor and the winding resistance of the primary coil of the first transformer, in a case that the power supply mode of the line is a DC power supply mode; and

The grid voltage in the DC power supply mode is calculated based on the total impedance of the voltage detection circuit and the second voltage signal.

On the basis of the above embodiment, as a preferred implementation, the operation mode of the main circuit of the traction converter is controlled based on the power supply mode and the grid voltage as follows.

The main circuit of the traction converter is controlled to be in an AC operation mode, in a case that the power supply mode of the line is the AC power supply mode.

The main circuit of the traction converter is controlled to be in a DC operation mode, in a case that the power supply mode of the line is a DC power supply mode.

The operation of the traction converter is stopped, and the main circuit of the traction converter is controlled to be in the AC operation mode, in a case that the rail vehicle is in a no-power area.

The operation of the traction converter is stopped, and the main circuit of the traction converter is controlled to be in the AC operation mode, in a case that the rail vehicle is in an abnormal working condition.

On the basis of the above embodiment, as a preferred implementation, the method further includes the following step:

the power supply mode of the line and the operation mode of the main circuit of the traction converter are transmitted to a display in a driver control room.

The embodiments in the specification are described in a progressive manner, and each embodiment places emphasis on the difference from other embodiments. The same or similar parts may be seen from each other. Regarding the apparatus, the device and the computer-readable storage medium disclosed in the embodiments, they correspond to the method disclosed in the embodiments and thus the description thereof is simple, and related parts may be seen from the description of the method.

It may be further known by those skilled in the art that exemplary units and algorithm steps described in combination with the disclosed embodiments herein may be realized by electronic hardware, computer software or a combination thereof. In order to clearly describe interchangeability of the hardware and the software, steps and composition of each of the embodiments are generally described in view of functions in the above specification. Whether these functions are performed in hardware or software depends on the specific application and design constraints for the technical solution. Those skilled in the art may use different methods to implement the described functions for each particular application, and such implementation should not be regarded as going beyond the scope of the present disclosure.

Steps of the method or algorithm described in the embodiments disclosed herein may be directly implemented by hardware, a software module executed by a processor, or a combination thereof. The software module may be arranged in a random access memory (RAM), a memory, a read-only memory (ROM), an electrical programmable ROM, an electrically erasable programmable ROM, a register, a hardware disk, a removable magnetic disk, a CD-ROM, or any other forms of storage medium well known in the art.

The apparatus and the method for controlling a traction converter according to the present disclosure have been introduced in detail above. The principle and implementation of the present disclosure are described herein by specific examples. The description of the above embodiments is intended to facilitate understanding the method and core idea of the present disclosure. It should be noted that improvements and modifications may be made to the present disclosure by those skilled in the art without departing from the principle of the present disclosure. The invention is defined by the protection scope of the claims.

**Claims**

1. An apparatus for controlling a traction converter, comprising:

   a voltage detection circuit (10) and a transmission control unit (20),

wherein the voltage detection circuit (10) is configured to detect a grid voltage and output a voltage signal, the transmission control unit (20) is configured to determine a power supply mode of a line based on the voltage signal, calculate the grid voltage based on the voltage signal, and control an operation mode of a main circuit of the traction converter based on the power supply mode and the grid voltage, wherein the line belongs to the grid; wherein the voltage detection circuit (10) comprises:

a first voltage detection circuit and a second voltage detection circuit, wherein the first voltage detection circuit comprises a transformer, and the first voltage detection circuit is configured to perform a step-down processing on the grid voltage through the transformer and output a first voltage signal obtained through the step-down processing, and

the second voltage detection circuit comprises a voltage sensor, and the second voltage detection circuit is configured to collect the grid voltage through the voltage sensor and output a second voltage signal;

wherein the transformer comprises a first transformer and a second transformer, wherein a primary coil of the first transformer is connected to a pantograph, a secondary coil of the first transformer is connected to a primary coil of the second transformer, and a secondary coil of the second transformer is connected to the transmission control unit;

wherein the second voltage detection circuit further comprises a current-limiting resistor and a filter capacitor, wherein the current-limiting resistor is connected in series with the primary coil of the first transformer, the voltage sensor is connected in parallel with the current-limiting resistor, and the filter capacitor is connected in parallel with the current-limiting resistor;

wherein the transmission control unit (20) is further configured to:

determine the power supply mode of the line as an AC power supply mode, in a case that the first voltage signal and the second voltage signal each is an AC signal and the first voltage signal has a frequency the same as that of the second voltage signal;

determine the power supply mode of the line as a DC power supply mode, in a case that the first voltage signal is in an amplitude of zero and the second voltage signal is a DC signal;

determine that a rail vehicle associated with the pantograph is in a no-power area, in a case that the first voltage signal and the second voltage signal each is in an amplitude of zero; and

determine that a rail vehicle associated with the pantograph is in an abnormal working condition, in a case that the first voltage signal is an AC signal and the second voltage signal is inconsistent with the first voltage signal;

wherein the transmission control unit (20) is further configured to:

in a case that the power supply mode of the line is an AC power supply mode,

calculate a total impedance of an AC/DC voltage detection link based on a transformation ratio of the first transformer, a transformation ratio of the second transformer, an equivalent sampling resistance of the AC/DC grid voltage sampling module, a winding resistance of the primary coil of the first transformer, a resistance of the current-limiting resistor and a capacitance of the filter capacitor, wherein the AC/DC voltage detection link comprises the voltage detection circuit and the AC/DC grid voltage sampling module; and

calculate the grid voltage in the AC power supply mode, based on the total impedance of the AC/DC voltage detection link and a sampling voltage of the equivalent sampling resistance of the AC/DC grid voltage sampling module;

in a case that the power supply mode of the line is a DC power supply mode, calculate a total impedance of the voltage detection circuit based on the resistance of the current-limiting resistor and the winding resistance of the primary coil of the first transformer; and

calculate the grid voltage in the DC power supply mode based on the total impedance of the voltage detection circuit and the second voltage signal;

wherein the transmission control unit (20) is further configured to:

control the main circuit of the traction converter to be in an AC operation mode, in a case that the power supply mode of the line is the AC power supply mode;

control the main circuit of the traction converter to be in a DC operation mode, in a case that the power supply mode of the line is the DC power supply mode;

stop an operation of the traction converter and control the main circuit of the traction converter to be in the AC operation mode, in a case that the rail vehicle associated with the pantograph is in a no-power area; and

stop the operation of the traction converter and control the main circuit of the traction converter to be in the AC operation mode, in a case that the rail vehicle associated with the pantograph is in an abnormal working condition; and

wherein the transmission control unit comprises: a communication processing module, configured for data interaction with a display in a driver control room.

2. The apparatus according to claim 1, wherein the transmission control unit comprises:

an AC/DC grid voltage sampling module, configured to convert the voltage signal into a voltage signal which is allowable to be inputted to a digital signal processing module;

the digital signal processing module, configured to: determine the power supply mode of the line based on the voltage signal outputted by the AC/DC grid voltage sampling module, calculate the grid voltage based on the voltage signal outputted by the AC/DC grid voltage sampling module, and control the operation mode of the main circuit of the traction converter based on the power supply mode and the grid voltage.

3. The apparatus according to claim 1, wherein the transmission control unit is further configured to transmit the power supply mode of the line and the operation mode of the main circuit of the traction converter to the display in the driver control room.

4. A method for controlling a traction converter, comprising:

receiving a voltage signal outputted by a voltage detection circuit (S101);

determining a power supply mode of a line based on the voltage signal (S102), wherein the line belongs to a grid;

calculating a grid voltage based on the voltage signal (S 103); and

controlling an operation mode of a main circuit of the traction converter based on the power supply mode and the grid voltage(S104);

wherein the receiving the voltage signal outputted by the voltage detection circuit comprises:

receiving a first voltage signal outputted by a first voltage detection circuit and a second voltage signal outputted by a second voltage detection circuit;

wherein the first voltage detection circuit comprises a transformer, and the first voltage detection circuit is configured to perform step-down processing on the grid voltage through the transformer and output a first voltage signal obtained through the step-down processing;

the second voltage detection circuit comprises a voltage sensor, and the second voltage detection circuit is configured to collect the grid voltage through the voltage sensor and output the second voltage signal;

wherein the determining the power supply mode of the line based on the voltage signal comprises:

determining the power supply mode of the line as an AC power supply mode, in a case that the first voltage signal and the second voltage signal each is an AC signal and the first voltage signal has a frequency the same as that of the second voltage signal;

determining the power supply mode of the line as a DC power supply mode, in a case that the first voltage signal is in an amplitude of zero and the second voltage signal is a DC signal;

determining that a rail vehicle associated with a pantograph is in a no-power area, in a case that the first voltage signal and the second voltage signal each is in an amplitude of zero; and

determining that the rail vehicle associated with the pantograph is in an abnormal working condition, in a case that the first voltage signal is an AC signal and the second voltage signal is inconsistent with the first voltage signal;

wherein the calculating the grid voltage based on the voltage signal comprises:

in a case that the power supply mode of the line is an AC power supply mode,

calculating a total impedance of an AC/DC voltage detection link based on a transformation ratio of a first transformer, a transformation ratio of a second transformer, an equivalent sampling resistance of an AC/DC grid voltage sampling module, a winding resistance of a primary coil of the first transformer, a resistance of a current-limiting resistor and a capacitance of a filter capacitor, wherein the AC/DC voltage detection link comprises the voltage detection circuit and the AC/DC grid voltage sampling module; and
calculating the grid voltage in the AC power supply mode, based on the total impedance of the AC/DC voltage detection link and a sampling voltage of the equivalent sampling resistance of the AC/DC grid voltage sampling module;

in a case that the power supply mode of the line is a DC power supply mode,

calculating a total impedance of the voltage detection circuit based on the resistance of the current-limiting resistor and the winding resistance of the primary coil of the first transformer; and
calculating the grid voltage in the DC power supply mode based on the total impedance of the voltage detection circuit and the second voltage signal;

wherein the controlling the operation mode of the main circuit of the traction converter based on the power supply mode and the grid voltage comprises:

controlling the main circuit of the traction converter to be in an AC operation mode, in a case that the power supply mode of the line is the AC power supply mode;
controlling the main circuit of the traction converter to be in a DC operation mode, in a case that the power supply mode of the line is a DC power supply mode;
stopping the operation of the traction converter and controlling the main circuit of the traction converter to be in the AC operation mode, in a case that the rail vehicle is in a no-power area; and
stopping the operation of the traction converter and controlling the main circuit of the traction converter to be in the AC operation mode, in a case that the rail vehicle is in an abnormal working condition.

5. The method according to claim 4, further comprising:
transmitting the power supply mode of the line and the operation mode of the main circuit of the traction converter to a display in a driver control room.


**Patentansprüche**

1. Vorrichtung zum Steuern eines Traktionsumrichters, umfassend:

eine Spannungserfassungsschaltung (10) und eine Übertragungssteuereinheit (20),
wobei die Spannungserfassungsschaltung (10) so konfiguriert ist, dass sie eine Netzspannung erfasst und ein Spannungssignal ausgibt,
die Übertragungssteuereinheit (20) so konfiguriert ist, dass sie einen Stromversorgungsmodus einer Leitung anhand des Spannungssignals bestimmt, die Netzspannung anhand des Spannungssignals berechnet und einen Betriebsmodus eines Hauptstromkreises des Traktionsumrichters anhand des Stromversorgungsmodus und der Netzspannung steuert, wobei die Leitung zu dem Netz gehört;
wobei die Spannungserfassungsschaltung (10) Folgendes umfasst:

eine erste Spannungserfassungsschaltung und eine zweite Spannungserfassungsschaltung,
wobei die erste Spannungserfassungsschaltung einen Transformator umfasst und die erste Spannungserfassungsschaltung so konfiguriert ist, dass sie eine Abwärtsverarbeitung der Netzspannung durch den Transformator durchführt und ein erstes Spannungssignal ausgibt, das durch die Abwärtsverarbeitung erhalten wird, und
die zweite Spannungserfassungsschaltung einen Spannungssensor umfasst und die zweite Spannungserfassungsschaltung so konfiguriert ist, dass sie die Netzspannung über den Spannungssensor erfasst und ein zweite Spannungssignal ausgibt;
wobei der Transformator einen ersten Transformator und einen zweiten Transformator umfasst,
wobei eine Primärspule des ersten Transformators mit einem Stromabnehmer verbunden ist, eine Sekundärspule des ersten Transformators mit einer Primärspule des zweiten Transformators verbunden ist und eine Sekundärspule des zweiten Transformators mit der Übertragungssteuereinheit verbunden ist;
wobei die zweite Spannungserfassungsschaltung ferner einen Strombegrenzungswiderstand und einen Filterkondensator umfasst,

wobei der Strombegrenzungswiderstand mit der Primärspule des ersten Transformators in Reihe geschaltet ist, der Spannungssensor zum Strombegrenzungswiderstand parallel geschaltet ist und der Filterkondensator zum Strombegrenzungswiderstand parallel geschaltet ist;

wobei die Übertragungssteuereinheit (20) ferner konfiguriert ist zum:

Bestimmen des Stromversorgungsmodus der Leitung als AC-Stromversorgungsmodus, wenn das erste Spannungssignal und das zweite Spannungssignal jeweils ein AC-Signal sind und das erste Spannungssignal die gleiche Frequenz wie das zweite Spannungssignal aufweist;

Bestimmen des Stromversorgungsmodus der Leitung als DC-Stromversorgungsmodus, wenn das erste Spannungssignal eine Amplitude von Null aufweist und das zweite Spannungssignal ein DC-Signal ist;

Bestimmen, dass sich ein Schienenfahrzeug, das dem Stromabnehmer zugeordnet ist, in einem stromlosen Bereich befindet, wenn das erste Spannungssignal und das zweite Spannungssignal jeweils eine Amplitude von Null aufweisen; und

Bestimmen, dass sich ein Schienenfahrzeug, das dem Stromabnehmer zugeordnet ist, in einem anormalen Betriebszustand befindet, wenn das erste Spannungssignal ein AC-Signal ist und das zweite Spannungssignal nicht mit dem ersten Spannungssignal übereinstimmt;

wobei die Übertragungssteuereinheit (20) ferner konfiguriert ist zum:

in einem Fall, in dem der Stromversorgungsmodus der Leitung ein AC-Stromversorgungsmodus ist,

Berechnen einer Gesamtimpedanz einer AC/DC-Spannungserfassungsverbindung anhand eines Übersetzungsverhältnisses des ersten Transformators, eines Übersetzungsverhältnisses des zweiten Transformators, eines äquivalenten Abtastwiderstands des AC/DC-Netzspannungs-Abtastmoduls, eines Wicklungswiderstands der Primärspule des ersten Transformators, eines Widerstands des Strombegrenzungswiderstands und einer Kapazität des Filterkondensators, wobei die AC/DC-Spannungserfassungsverbindung die Spannungserfassungsschaltung und das AC/DC-Netzspannungs-Abtastmodul umfasst; und

Berechnen der Netzspannung in dem AC-Stromversorgungsmodus anhand der Gesamtimpedanz der AC/DC-Spannungserfassungsverbindung und einer Abtastspannung des äquivalenten Abtastwiderstands des AC/DC-Netzspannungs-Abtastmoduls;

in einem Fall, in dem der Stromversorgungsmodus der Leitung ein DC-Stromversorgungsmodus ist,

Berechnen der Gesamtimpedanz der Spannungserfassungsschaltung anhand des Widerstands des Strombegrenzungswiderstands und des Wicklungswiderstands der Primärspule des ersten Transformators; und

Berechnen der Netzspannung in dem DC-Stromversorgungsmodus anhand der Gesamtimpedanz der Spannungserfassungsschaltung und des zweiten Spannungssignals;

wobei die Übertragungssteuereinheit (20) ferner konfiguriert ist zum:

Steuern des Hauptstromkreises des Traktionsumrichters in einen AC-Betriebsmodus, wenn der Stromversorgungsmodus der Leitung der AC-Stromversorgungsmodus ist;

Steuern des Hauptstromkreises des Traktionsumrichters in einen DC-Betriebsmodus, wenn der Stromversorgungsmodus der Leitung der DC-Stromversorgungsmodus ist;

Stoppen eines Betriebs des Traktionsstromrichters und Steuern des Hauptstromkreises des Traktionsstromrichters, so dass er sich in dem AC-Betriebsmodus befindet, wenn sich das Schienenfahrzeug, das dem Stromabnehmer zugeordnet ist, in einem stromlosen Bereich befindet; und

Stoppen des Betriebs des Traktionsstromrichters und Steuern des Hauptstromkreises des Traktionsstromrichters, so dass er sich in dem AC-Betriebsmodus befindet, wenn sich das Schienenfahrzeug, das dem Stromabnehmer zugeordnet ist, in einem anormalen Betriebszustand befindet; und

wobei das Übertragungssteuereinheit Folgendes umfasst: ein Kommunikationsverarbeitungsmodul, das für die Dateninteraktion mit einer Anzeige in einem Fahrersteuerungsraum konfiguriert ist.

2. Vorrichtung nach Anspruch 1, wobei die Übertragungssteuereinheit Folgendes umfasst:

ein AC/DC-Netzspannungs-Abtastmodul, das so konfiguriert ist, dass es das Spannungssignal in ein Spannungssignal umwandelt, das in ein digitales Signalverarbeitungsmodul eingegeben werden kann;

das digitale Signalverarbeitungsmodul, das konfiguriert ist zum: Bestimmen des Stromversorgungsmodus der Leitung anhand des Spannungssignals, das von dem AC/DC-Netzspannungs-Abtastmodul ausgegeben wird, Berechnen der Netzspannung anhand des Spannungssignals, das von dem AC/DC-Netzspannungs-Abtastmodul ausgegeben wird, und Steuern des Betriebsmodus des Hauptstromkreises des Traktionsumrichters anhand des Stromversorgungsmodus und der Netzspannung.

3. Vorrichtung nach Anspruch 1, wobei die Übertragungssteuereinheit ferner so konfiguriert ist, dass sie den Stromversorgungsmodus der Leitung und den Betriebsmodus des Hauptstromkreises des Traktionsumrichters an die Anzeige in dem Fahrersteuerungsraum übermittelt.

4. Verfahren zum Steuern eines Traktionsumrichters, umfassend:

Empfangen eines Spannungssignals, das von einer Spannungserfassungsschaltung (S101) ausgegeben wird;
Bestimmen eines Stromversorgungsmodus einer Leitung anhand des Spannungssignals (S102), wobei die Leitung zu einem Netz gehört;
Berechnen einer Netzspannung anhand des Spannungssignals (S103); und
Steuern eines Betriebsmodus eines Hauptstromkreises des Traktionsumrichters anhand des Stromversorgungsmodus und der Netzspannung (S104);
wobei das Empfangen des Spannungssignals, das von der Spannungserfassungsschaltung ausgegeben wird, Folgendes umfasst:

Empfangen eines ersten Spannungssignals, das von einer ersten Spannungserfassungsschaltung ausgegeben wird, und eines zweiten Spannungssignals, das von einer zweiten Spannungserfassungsschaltung ausgegeben wird;
wobei die erste Spannungserfassungsschaltung einen Transformator umfasst und die erste Spannungserfassungsschaltung so konfiguriert ist, dass sie eine Abwärtsverarbeitung der Netzspannung durch den Transformator durchführt und ein erstes Spannungssignal ausgibt, das durch die Abwärtsverarbeitung erhalten wird;
die zweite Spannungserfassungsschaltung einen Spannungssensor umfasst und die zweite Spannungserfassungsschaltung so konfiguriert ist, dass sie die Netzspannung über den Spannungssensor erfasst und das zweite Spannungssignal ausgibt;
wobei das Bestimmen des Stromversorgungsmodus der Leitung anhand des Spannungssignals Folgendes umfasst:

Bestimmen des Stromversorgungsmodus der Leitung als AC-Stromversorgungsmodus, wenn das erste Spannungssignal und das zweite Spannungssignal jeweils ein AC-Signal sind und das erste Spannungssignal die gleiche Frequenz wie das zweite Spannungssignal aufweist;
Bestimmen des Stromversorgungsmodus der Leitung als DC-Stromversorgungsmodus, wenn das erste Spannungssignal eine Amplitude von Null aufweist und das zweite Spannungssignal ein DC-Signal ist;
Bestimmen, dass sich ein Schienenfahrzeug, das einem Stromabnehmer zugeordnet ist, in einem stromlosen Bereich befindet, wenn das erste Spannungssignal und das zweite Spannungssignal jeweils eine Amplitude von Null aufweisen; und
Bestimmen, dass sich das Schienenfahrzeug, das dem Stromabnehmer zugeordnet ist, in einem anormalen Betriebszustand befindet, wenn das erste Spannungssignal ein AC-Signal ist und das zweite Spannungssignal nicht mit dem ersten Spannungssignal übereinstimmt;
wobei das Berechnen der Netzspannung anhand des Spannungssignals Folgendes umfasst:

in einem Fall, in dem der Stromversorgungsmodus der Leitung ein AC-Stromversorgungsmodus ist, Berechnen einer Gesamtimpedanz einer AC/DC-Spannungserfassungsverbindung anhand eines Übersetzungsverhältnisses eines ersten Transformators, eines Übersetzungsverhältnisses eines zweiten Transformators, eines äquivalenten Abtastwiderstands eines AC/DC-Netzspannungs-Abtastmoduls, eines Wicklungswiderstands einer Primärspule des ersten Transformators, eines Widerstands eines Strombegrenzungswiderstands und einer Kapazität eines Filterkondensators, wobei die AC/DC-Spannungserfassungsverbindung die Spannungserfassungsschaltung und das AC/DC-Netzspannungs-Abtastmodul umfasst; und

Berechnen der Netzspannung in dem AC-Stromversorgungsmodus anhand der Gesamtimpedanz der AC/DC-Spannungserfassungsverbindung und einer Abtastspannung des äquivalenten Abtastwiderstands des AC/DC-Netzspannungs-Abtastmoduls;

in einem Fall, in dem der Stromversorgungsmodus der Leitung ein DC-Stromversorgungsmodus ist,

Berechnen der Gesamtimpedanz der Spannungserfassungsschaltung anhand des Widerstands des Strombegrenzungswiderstands und des Wicklungswiderstands der Primärspule des ersten Transformators;

Berechnen der Netzspannung in dem DC-Stromversorgungsmodus anhand der Gesamtimpedanz der Spannungserfassungsschaltung und des zweiten Spannungssignals;

wobei das Steuern des Betriebsmodus des Hauptstromkreises des Traktionsumrichters anhand des Stromversorgungsmodus und der Netzspannung Folgendes umfasst:

Steuern des Hauptstromkreises des Traktionsumrichters in einen AC-Betriebsmodus, wenn der Stromversorgungsmodus der Leitung der AC-Stromversorgungsmodus ist;

Steuern des Hauptstromkreises des Traktionsumrichters in einen DC-Betriebsmodus, wenn der Stromversorgungsmodus der Leitung einer DC-Stromversorgungsmodus ist;

Stoppen des Betriebs des Traktionsstromrichters und Steuern des Hauptstromkreises des Traktionsstromrichters, so dass er sich in dem AC-Betriebsmodus befindet, wenn sich das Schienenfahrzeug in einem stromlosen Bereich befindet; und

Stoppen des Betriebs des Traktionsstromrichters und Steuern des Hauptstromkreises des Traktionsstromrichters, so dass er sich in dem AC-Betriebsmodus befindet, wenn sich das Schienenfahrzeug in einem anormalen Betriebszustand befindet.

5. Verfahren nach Anspruch 4, ferner umfassend:
Übermitteln des Stromversorgungsmodus der Leitung und des Betriebsmodus des Hauptstromkreises des Traktionsumrichters an eine Anzeige in einem Fahrersteuerungsraum.

**Revendications**

1. Appareil de commande d'un convertisseur de traction, l'appareil comprenant :

un circuit (10) de détection de tension et une unité (20) de commande de transmission,

dans lequel le circuit (10) de détection de tension est conçu pour détecter une tension de grille et pour délivrer un signal de tension, et

l'unité (20) de commande de transmission est conçue pour déterminer un mode d'alimentation électrique d'une ligne sur la base du signal de tension, pour calculer la tension de grille sur la base du signal de tension, et pour commander un mode de fonctionnement d'un circuit principal du convertisseur de traction sur la base du mode d'alimentation électrique et de la tension de grille, la ligne appartenant à la grille ;

dans lequel le circuit (10) de détection de tension comprend :

un premier circuit de détection de tension et un second circuit de détection de tension,

le premier circuit de détection de tension comprenant un transformateur, et le premier circuit de détection de tension étant conçu pour effectuer un traitement d'abaissement de tension sur la tension de grille par l'intermédiaire du transformateur et pour délivrer un premier signal de tension obtenu par l'intermédiaire du traitement d'abaissement de tension, et

le second circuit de détection de tension comprenant un capteur de tension, et le second circuit de détection de tension étant conçu pour collecter la tension de grille par l'intermédiaire du capteur de tension et pour délivrer un second signal de tension ;

dans lequel le transformateur comprend un premier transformateur et un second transformateur,

une bobine primaire du premier transformateur étant connectée à un pantographe, une bobine secondaire du premier transformateur étant connectée à une bobine primaire du second transformateur, et une bobine secondaire du second transformateur étant connectée à l'unité de commande de transmission ;

dans lequel le second circuit de détection de tension comprend en outre une résistance de limitation de courant et un condensateur de filtrage,

la résistance de limitation de courant étant connectée en série à la bobine primaire du premier transformateur, le capteur de tension étant connecté en parallèle à la résistance de limitation de courant, et le condensateur de filtrage étant connecté en parallèle à la résistance de limitation de courant ;
dans lequel l'unité (20) de commande de transmission est conçue en outre :

pour déterminer le mode d'alimentation électrique de la ligne en tant que mode d'alimentation électrique CA, dans le cas où le premier signal de tension et le second signal de tension seraient chacun un signal CA et le premier signal de tension présenterait la même fréquence que le second signal de tension,
pour déterminer le mode d'alimentation électrique de la ligne en tant que mode d'alimentation électrique CC, dans le cas où le premier signal de tension présenterait une amplitude égale à zéro et le second signal de tension serait un signal CC,
pour déterminer qu'un véhicule ferroviaire associé au pantographe se trouve dans une zone sans énergie, dans le cas où le premier signal de tension et le second signal de tension présenteraient chacun une amplitude égale à zéro, et
pour déterminer qu'un véhicule ferroviaire associé au pantographe est en état de fonctionnement anormal, dans le cas où le premier signal de tension serait un signal CA et le second signal de tension ne concorderait pas avec le premier signal de tension ;
dans lequel l'unité (20) de commande de transmission est conçue en outre:

dans le cas où le mode d'alimentation électrique de la ligne serait un mode d'alimentation électrique CA,

pour calculer une impédance totale d'une liaison de détection de tension CA/CC sur la base d'un rapport de transformation du premier transformateur, d'un rapport de transformation du second transformateur, d'une résistance d'échantillonnage équivalente du module d'échantillonnage de tension de grille CA/CC, d'une résistance à l'enroulement de la bobine primaire du premier transformateur, d'une résistance électrique de la résistance de limitation de courant et d'une capacité du condensateur de filtrage, la liaison de détection de tension CA/CC comprenant le circuit de détection de tension et le module d'échantillonnage de tension de grille CA/CC, et
pour calculer la tension de grille dans le mode d'alimentation électrique CA, sur la base de l'impédance totale de la liaison de détection de tension CA/CC et d'une tension d'échantillonnage de la résistance d'échantillonnage équivalente du module d'échantillonnage de tension de grille CA/CC ;

dans le cas où le mode d'alimentation électrique de la ligne serait un mode d'alimentation électrique CC,
calculer une impédance totale du circuit de détection de tension sur la base de la résistance électrique de la résistance de limitation de courant et de la résistance à l'enroulement de la bobine primaire du premier transformateur, et
pour calculer la tension de grille dans le mode d'alimentation électrique CC sur la base de l'impédance totale du circuit de détection de tension et du second signal de tension ;
dans lequel l'unité (20) de commande de transmission est conçue en outre :

pour amener le circuit principal du convertisseur de traction à être dans un mode de fonctionnement CA, dans le cas où le mode d'alimentation électrique de la ligne serait le mode d'alimentation électrique CA,
pour amener le circuit principal du convertisseur de traction à être dans un mode de fonctionnement CC, dans le cas où le mode d'alimentation électrique de la ligne serait le mode d'alimentation électrique CC,
pour arrêter un fonctionnement du convertisseur de traction et pour amener le circuit principal du convertisseur de traction à être dans le mode de fonctionnement CA, dans le cas où le véhicule ferroviaire associé au pantographe se trouverait dans une zone sans énergie, et
pour arrêter le fonctionnement du convertisseur de traction et pour amener le circuit principal du convertisseur de traction à être dans le mode de fonctionnement CA, dans le cas où le véhicule ferroviaire associé au pantographe serait en état de fonctionnement anormal ; et
dans lequel l'unité de commande de transmission comprend : un module de traitement de communication, conçu pour effectuer une interaction de données avec un écran dans une salle de commande de conduite.

2. L'appareil selon la revendication 1, dans lequel l'unité de commande de transmission comprend :

un module d'échantillonnage de tension de grille CA/CC, conçu pour convertir le signal de tension en un signal de tension qui peut être introduit dans un module de traitement de signal numérique ;

le module de traitement de signal numérique, conçu : pour déterminer le mode d'alimentation électrique de la ligne sur la base du signal de tension délivré par le module d'échantillonnage de tension de grille CA/CC, pour calculer la tension de grille sur la base du signal de tension délivré par le module d'échantillonnage de tension de grille CA/CC, et pour commander le mode de fonctionnement du circuit principal du convertisseur de traction sur la base du mode d'alimentation électrique et de la tension de grille.

3. L'appareil selon la revendication 1, dans lequel l'unité de commande de transmission est conçue en outre pour transmettre le mode d'alimentation électrique de la ligne et le mode de fonctionnement du circuit principal du convertisseur de traction à l'écran dans la salle de commande de conduite.

4. Procédé de commande d'un convertisseur de traction, le procédé comprenant :

la réception d'un signal de tension délivré par un circuit de détection de tension (S101) ;
la détermination d'un mode d'alimentation électrique d'une ligne sur la base du signal de tension (S102), la ligne appartenant à une grille ;
le calcul d'une tension de grille sur la base du signal de tension (S103) ; et
la commande d'un mode de fonctionnement d'un circuit principal du convertisseur de traction sur la base du mode d'alimentation électrique et de la tension de grille (S104) ;
dans lequel la réception du signal de tension, délivré par le circuit de détection de tension, comprend :

la réception d'un premier signal de tension délivré par un premier circuit de détection de tension et d'un second signal de tension délivré par un second circuit de détection de tension,
le premier circuit de détection de tension comprenant un transformateur, et le premier circuit de détection de tension étant conçu pour effectuer un traitement d'abaissement de tension sur la tension de grille par l'intermédiaire du transformateur et pour délivrer le premier signal de tension obtenu par l'intermédiaire du traitement d'abaissement de tension,
le second circuit de détection de tension comprenant un capteur de tension, et le second circuit de détection de tension étant conçu pour collecter la tension de grille par l'intermédiaire du capteur de tension et pour délivrer le second signal de tension ;
dans lequel la détermination du mode d'alimentation électrique de la ligne, sur la base du signal de tension, comprend :

la détermination du mode d'alimentation électrique de la ligne en tant que mode d'alimentation électrique CA, dans le cas où le premier signal de tension et le second signal de tension seraient chacun un signal CA et le premier signal de tension présenterait la même fréquence que le second signal de tension,
la détermination du mode d'alimentation électrique de la ligne en tant que mode d'alimentation électrique CC, dans le cas où le premier signal de tension présenterait une amplitude égale à zéro et le second signal de tension serait un signal CC,
la détermination qu'un véhicule ferroviaire associé à un pantographe se trouve dans une zone sans énergie, dans le cas où le premier signal de tension et le second signal de tension présenteraient chacun une amplitude égale à zéro, et
la détermination que le véhicule ferroviaire associé au pantographe est en état de fonctionnement anormal, dans le cas où le premier signal de tension serait un signal CA et le second signal de tension ne concorderait pas avec le premier signal de tension ;
dans lequel le calcul de la tension de grille, sur la base du signal de tension, comprend :

dans le cas où le mode d'alimentation électrique de la ligne serait un mode d'alimentation électrique CA,
le calcul d'une impédance totale d'une liaison de détection de tension CA/CC sur la base d'un rapport de transformation d'un premier transformateur, d'un rapport de transformation d'un second transformateur, d'une résistance d'échantillonnage équivalente d'un module d'échantillonnage de tension de grille CA/CC, d'une résistance à l'enroulement d'une bobine primaire du premier transformateur, d'une résistance électrique d'une résistance de limitation de courant et d'une capacité d'un condensateur de filtrage, la liaison de détection de tension CA/CC comprenant le circuit de détection de tension et le module d'échantillonnage de tension de grille CA/CC, et

le calcul de la tension de grille dans le mode d'alimentation électrique CA, sur la base de l'impédance totale de la liaison de détection de tension CA/CC et d'une tension d'échantillonnage de la résistance d'échantillonnage équivalente du module d'échantillonnage de tension de grille CA/CC, et

dans le cas où le mode d'alimentation électrique de la ligne serait un mode d'alimentation électrique CC,

le calcul d'une impédance totale du circuit de détection de tension sur la base de la résistance électrique de la résistance de limitation de courant et de la résistance à l'enroulement de la bobine primaire du premier transformateur, et

le calcul de la tension de grille dans le mode d'alimentation électrique CC sur la base de l'impédance totale du circuit de détection de tension et du second signal de tension ;

dans lequel la commande du mode de fonctionnement du circuit principal du convertisseur de traction, sur la base du mode d'alimentation électrique et de la tension de grille, comprend :

la commande du circuit principal du convertisseur de traction pour l'amener à être dans un mode de fonctionnement CA, dans le cas où le mode d'alimentation électrique de la ligne serait le mode d'alimentation électrique CA,

la commande du circuit principal du convertisseur de traction pour l'amener à être dans un mode de fonctionnement CC, dans le cas où le mode d'alimentation électrique de la ligne serait le mode d'alimentation électrique CC,

l'arrêt du fonctionnement du convertisseur de traction et la commande du circuit principal du convertisseur de traction pour l'amener à être dans le mode de fonctionnement CA, dans le cas où le véhicule ferroviaire se trouverait dans une zone sans énergie, et

l'arrêt du fonctionnement du convertisseur de traction et la commande du circuit principal du convertisseur de traction pour l'amener à être dans le mode de fonctionnement CA, dans le cas où le véhicule ferroviaire serait en état de fonctionnement anormal.

5. Le procédé selon la revendication 4, comprenant en outre :
la transmission du mode d'alimentation électrique de la ligne et du mode de fonctionnement du circuit principal du convertisseur de traction à un écran dans une salle de commande de conduite.

**FIG. 1**

Pantograph

X1

T2

n1  n2  n2  n3

T1

AC/DC
grid
voltage
sampling
module

C   R   Voltage
sensor   U

Digital signal
processing
module

Communication
processing
module

Train network communication bus

Display in
driver control
room

**FIG. 2**

**FIG. 3**

```
                                                          S101
┌─────────────────────────────────────────────┐
│     Receive a voltage signal outputted by a   │
│            voltage detection circuit          │
└─────────────────────────────────────────────┘
                       │
                       ▼
                                                          S102
┌─────────────────────────────────────────────┐
│   Determine a power supply mode of a line     │
│          based on the voltage signal          │
└─────────────────────────────────────────────┘
                       │
                       ▼
                                                          S103
┌─────────────────────────────────────────────┐
│  Calculate a grid voltage based on the        │
│              voltage signal                   │
└─────────────────────────────────────────────┘
                       │
                       ▼
                                                          S104
┌─────────────────────────────────────────────┐
│  Control an operation mode of a main circuit  │
│  of the traction converter based on the power │
│      supply mode and the grid voltage         │
└─────────────────────────────────────────────┘
```

**FIG. 4**

**REFERENCES CITED IN THE DESCRIPTION**

**Patent documents cited in the description**

- CN 202010751203X
- CN 105629190
- EP 3159202 A
- CN 105510680